# EUROPÄISCHE PATENTSCHRIFT

(11) **EP 2 326 466 B1**
(45) Veröffentlichungstag und Bekanntmachung des Hinweises auf die Patenterteilung: **20.06.2012**
(21) Anmeldenummer: 09777369.1
(22) Anmeldetag: 22.07.2009
(51) Int. Cl.: B25J 5/00

(54) **LUFTKISSENPLATTFORM ZUM TRAGEN EINES MANIPULATORARMS UND VERFAHRBARER ROBOTER**
AIR CUSHION PLATFORM FOR CARRYING A MANIPULATOR ARM AND MOVEABLE ROBOT
PLATE-FORME SUR COUSSIN D AIR PORTANT UN BRAS MANIPULATEUR ET ROBOT DÉPLAÇABLE

(30) Priorität: 22.07.2008 DE 202008009838 U
(43) Veröffentlichungstag der Anmeldung: 01.06.2011
(73) Patentinhaber: Robotics Technology Leaders GmbH, 81249 München (DE)
(72) Erfinder: RIESNER, Stefan, 81247 München (DE)
(74) Vertreter: Wagner, Bernhard Peter
(86) Internationale Anmeldenummer: PCT/EP2009/005326
(87) Internationale Veröffentlichungsnummer: WO 2010/009878

(56) Entgegenhaltungen:
- DE-A1-102006 026 132
- DE-A1-102007 011 028
- DE-U1- 9 100 213
- US-A- 3 295 700

## Beschreibung

Die Erfindung betrifft eine Luftkissenplattform zum Tragen eines Manipulatorarms, sowie einen verfahrbaren Roboter, der zum gesteuerten Führen eines Werkzeugs, insbesondere einer Filmkamera vorgesehen ist.

Bei der Produktion von Filmen und Fernsehsendungen werden oft virtuelle Welten eingesetzt, in denen die Protagonisten wie Schauspieler oder Nachrichtensprecher eingespielt werden. Diese Technik ist unter anderem als Bluescreen- oder Greenscreen-Technik bekannt. Um bei der Aufnahme mittels einer Kamera diese virtuelle Welt später auf das reale Bild entsprechend perspektivisch richtig anzupassen, ist es nötig, die genaue Position des Brennpunkts der Kamera sowie deren Blickrichtung, also ihre Orientierung im Raum zu kennen. Für diesen Zweck werden Roboter eingesetzt, welche Servoachsen mit Drehgebern besitzen, wobei jederzeit (z.B. im 4 ms-Takt) die Stellung der einzelnen Achsen abgefragt und damit die Position der Kamera und ihre Orientierung bestimmt werden kann.

Bei dieser Technik ist jedoch die Reichweite des Manipulatorarms eingeschränkt, sodass beispielsweise eine Kamerafahrt, bei der jederzeit Position und Orientierung bestimmbar ist, nicht möglich ist. Aufgrund des hohen Gewichts des Manipulatorarms und der Kamera ist ferner der direkte Einsatz von in der Regel filigranen Stellantriebsvorrichtungen, auf denen der Manipulatorarm und die Kamera gelagert ist, nicht oder nur unter hohen Kosten möglich.

Ferner sind im Stand der Technik Luftkissenplattformen bekannt, welche in der Regel per Hand verschiebbar sind. Weiter existieren externe Motorantriebe für Luftkissenplattformen, welche in die Luftkissenplattform eingeklinkt werden können, um diese mittels eines walzenförmigen Antriebs, welcher von einem leistungsstarken Motor angetrieben wird, zu verschieben. Eine reproduzierbare Positionsveränderung ist jedoch bei diesen Systemen nicht möglich.

Die DE 10 2007 011 028 A1 beschreibt ein Bearbeitungssystem. Hierbei weist ein Bearbeitungssystem zum Bearbeiten eines Werkstücks einen auf einem geführten Luftkissenträger angeordneten bewegbaren Industrieroboter auf. Der Industrieroboter ist mittels einer elektrischen oder pneumatischen Antriebseinrichtung, beispielsweise einem elektrischen Reibradantrieb, entlang einer Führungsschiene zwischen zwei Positionen in zwei Richtungen verstellbar.

Die DE 10 2006 026 132 A1 beschreibt ein Bearbeitungssystem für ein bewegtes Werkstück und ein Verfahren zum Positionieren des Bearbeitungssystems. Hierbei weist ein Bearbeitungssystem einen Industrieroboter auf, welcher fest mit einer ersten Trägerplatte verbunden ist. Die erste Trägerplatte kann durch ein Höhenausgleichsystem gegenüber einer zweiten Trägerplatte unterhalb der ersten Trägerplatte in ihrer Höhe verstellt werden. Die zweite Trägerplatte ist unter Zwischenschaltung eines Luftkissensystem mit einer Plattform gekoppelt. Die Plattform ist mittels einer Schwebeträgereinheit in Form einer Luftkisseneinheit gegenüber dem Untergrund eines Industrieroboterförderbands abgestützt. Das Bearbeitungssystem enthält ein Führungssystem in Form einer Führungsschiene, wobei das Führungssystem eine geradlinige Bewegung der Plattform gewährleistet. Die Bewegung der Plattform wird durch eine Antriebseinheit realisiert, welche beispielsweise als ein Reibradsystem ausgebildet sein kann, das mit dem Führungssystem in schaltbaren operativen Wirkkontakt steht und eine werkstückunabhängige Bewegung der Plattform entlang des Führungssystems auf dem Industrieroboterförderband gewährleistet.

Die DE 91 00 213 U1 beschreibt einen Roboter mit Sockel. Hierbei ist eine Bodenplatte eines Sockels eines Schwenkarmroboters über Schraubverbindungen mit einer Bodenplatte fest verbindbar. Durch in Füßen des Sockels angeordnete Luftkissenelemente, die bei Bedarf aktiviert werden, ist der Roboter nach Lösen der Schraubverbindungen zu einer Parkposition von Hand verschiebbar.

Der Erfindung liegt somit die Aufgabe zugrunde, eine Luftkissenplattform zum Tragen eines Manipulatorarms und einen verfahrbaren Roboter vorzusehen, bei denen eine genaue und reproduzierbare Positionsänderung möglich ist.

Diese Aufgabe wird durch die Luftkissenplattform nach Anspruch 1 und den verfahrbaren Roboter nach Anspruch 13 gelöst. Vorteilhafte Ausgestaltungen und Weiterbildungen der Erfindung werden in den Unteransprüchen dargelegt.

Erfindungsgemäß ist eine Luftkissenplattform zum Tragen eines Manipulatorarms vorgesehen, die mittels eines Luftkissensystems leichtgängig schwere Lasten entlang einer Bodenfläche bewegen kann, wobei an der Luftkissenplattform weiter Stellvorrichtungen vorgesehen sind, welche dazu geeignet sind, die Luftkissenplattform positionsgenau zu verschieben, wenn das Luftkissensystem in Betrieb ist.

Für den Fall, dass die Basis der Luftkissenplattform nicht plattenförmig ausgebildet ist, sondern wie bei einem Fernsehstativ, einer Pumpe oder einem Pedestal mindestens drei Füße aufweist, oder für eine kostengünstige Verwirklichung des Luftkissensystem ist es von Vorteil, wenn das Luftkissensystem zumindest drei Lufthebekissen umfasst, die um den Schwerpunkt der Luftkissenplattform herum angebracht sind.

Für die Verwirklichung einer ausgeglichenen Druckeinstellung innerhalb des Luftkissensystems im Falle einer ungleichmäßigen Gewichtsverteilung auf der Basis der Luftkissenplattform ist es besonders zweckmäßig, wenn das Luftkissensystem eine Palette mit einem einzelnen Luftkissen oder einem Luftkissensystem mit einer Vielzahl von miteinander verbundenen Luftkissen umfasst.

In vorteilhafter Weise umfasst die Gleitführung einen Befestigungsbügel mit einem ersten und einem senkrecht auf dem ersten Schenkel stehenden zweiten Schenkel, wobei der erste Schenkel zum Befestigen der Gleitführung an der Basis geeignet ist, ein Schienenelement, das mit dem zweiten Schenkel des Befestigungsbügels verbunden ist, und einen Verfahrschlitten, der gleitend an dem Schienenelement gelagert und der mit der Motorvorrichtung verbunden ist.

Für die Verwirklichung einer positionsgenauen und reproduzierbaren Verschiebung der Luftkissenplattform nicht die Erfindung vor, dass die Motorvorrichtung einen als Servomotor ausgebildeten Gleichstromgetriebemotor mit einem Geber, und zumindest ein mit einer Motorwelle des Gleichstromgetriebemotors verbundenes Antriebsrad umfasst, welches bei an der Basis befestigter Stellvorrichtung in ständigem Kontakt mit dem Boden steht.

Um eine Beschädigung der Motorvorrichtung aufgrund von seitlichen oder von oben einwirkenden Stößen zu vermeiden, ist es vorteilhaft, wenn die Motorvorrichtung ferner eine Radeinhausung sowie einen Motorschutzbügel zum Schutz des zumindest einen Antriebsrads und des Motors aufweist.

Hierbei ist es für einen schlupffreien Kontakt der Antriebsräder mit dem Boden von Vorteil, wenn die Motorvorrichtung mittels einer Feder gegen den Boden gedrückt wird, welche wirkungsmäßig zwischen der Motorvorrichtung und der Basis angebracht ist.

Es ist jedoch auch vorstellbar, dass die Motorvorrichtung ein Zusatzgewicht aufweist, welches oberhalb des zumindest einen Antriebsrads angeordnet ist, um das Antriebsrad infolge der Schwerkraft des Zusatzgewichts in Kontakt mit dem Boden zu halten.

Um die Umgebung oder auf dem Boden angebrachte Referenzpunkte oder Objekte zuverlässig zu identifizieren, zu klassifizieren, zu vermessen und ihre Position erkennen zu können, um somit die eigene Position und Orientierung der Luftkissenplattform hinsichtlich der Referenzpunkte bestimmen zu können, oder um eine Kollision mit im Raum befindlichen Objekten wie Tischen, Geräten oder Personen vermeiden zu können, ist es besonders von Vorteil, wenn die Luftkissenplattform Sensoren zur Positionserkennung wie einen Laserscanner umfasst.

Für den Fall, dass die Sensoren zur Positionserkennung selbst ein signifikantes Gewicht aufweisen, ist es von Vorteil, wenn die Sensoren zur Positionserkennung als Zusatzgewicht verwendet werden.

Im Falle von normalen Antriebsrädern ist es für eine Änderung der Fahrtrichtung der Luftkissenplattform zweckmäßig, wenn die Motorvorrichtung dreh- oder schwenkbar an der Gleitführung gelagert ist.

Es ist jedoch auch vorstellbar, die Motorvorrichtung nicht dreh- oder schwenkbar an der Gleitführung zu lagern. Hierbei ist es besonders zweckmäßig, wenn das zumindest eine Antriebsrad einem Paar von Allseitenrädern entspricht, wobei vorteilhafterweise drei Stellantriebsvorrichtungen an der Basis im Kreis angeordnet und zueinander im 120°-Winkel stehend vorgesehen sind, wobei der gemeinsame Schnittpunkt der drei Motorwellen der Motorvorrichtungen der ungefähre Schwerpunkt des Gesamtsystems ist.

Weiter ist erfindungsgemäß ein verfahrbarer Roboter, insbesondere zum gesteuerten Führen eines Werkzeugs, vorgesehen, der eine erfindungsgemäße Luftkissenplattform, einen Sockel, der auf der Luftkissenplattform montiert und von dieser verfahrbar getragen wird, und einen Manipulatorarm umfasst, der mit seinem einen Endabschnitt auf dem Sockel befestigt ist und der mit seinem anderen Ende (oder Hand) ein Werkzeug trägt.

Hierbei ist in einer Ausgestaltung der Erfindung das Werkzeug eine Filmkamera, in einer weiteren Ausgestaltung der Erfindung kann das Werkzeug jedoch auch eine Greifhand sein.

Um eine Beschädigung der Antriebsräder aufgrund einer Bewegung des Manipulatorarms auf der Luftkissenplattform während eines Verfahrvorgangs zu vermeiden, ist es von besonderem Vorteil, wenn die Steuerung der Luftkissenplattform mit einer Robotersteuerung verbunden ist, um den Roboter nur zu betätigen, wenn die Luftkissenplattform sich in der Standposition befindet.

Die Erfindung wird im Folgenden, beispielsweise anhand der Zeichnungen, näher erläutert. Es zeigen:
Figur 1A eine stark vereinfachte schematische Seitenansicht eines Roboters mit einem Manipulatorarm, der eine Filmkamera trägt, in einem Fernsehstudio mit einer erfindungsgemäßen Luftkissenplattform,
Figur 1B eine stark vereinfachte schematische Seitenansicht eines Roboters mit einem Manipulatorarm mit einer Greifhand mit der erfindungsgemäßen Luftkissenplattform,
Figur 2A eine perspektivische Ansicht der erfindungsgemäßen Luftkissenplattform mit einem darauf montierten Manipulatorarm.
Figur 2B eine Seitenansicht des in Figur 2A gezeigten Aufbaus.
Figur 2C eine Draufsicht des in Figur 2A gezeigten Aufbaus,
Figur 3A eine detaillierte, perspektivische Ansicht einer Stellantriebsvorrichtung gemäß der vorliegenden Erfindung,
Figur 3B eine Seitenansicht auf die erfindungsgemäße Stellantriebsvorrichtung aus Figur 3A,
Figur 3C eine Unteransicht der erfindungsgemäßen Stellantriebsvorrichtung aus Figur 3A, und
Figur 4 ein Ausführungsbeispiel einer Anordnung von Stellantriebsvorrichtungen an einer Basis der Luftkissenplattform gemäß der vorliegenden Erfindung,

In den verschiedenen Figuren der Zeichnung sind einander entsprechende Bauelemente mit gleichen Bezugszeichen versehen.

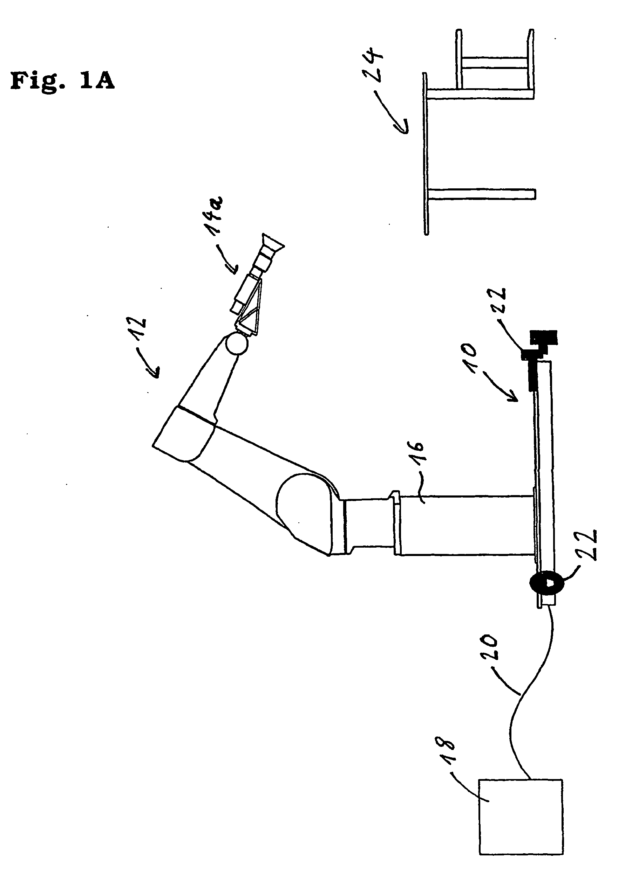

In Figur 1A ist stark vereinfacht und schematisch eine Ausführungsform einer Luftkissenplattform 10 gezeigt, auf welcher ein Manipulatorarm 12 mit einer Kamera 14a auf einem Sockel 16 montiert ist, und welche in einem Fernsehstudio aufgestellt ist. An der Luftkissenplattform 10 ist weiter eine Versorgungs-/Steuereinheit 18 angeschlossen, welche die Luftkissenplattform 10 über eine Versorgungsleitung 20 mit Luft versorgt. Ferner kann in der Versorgungsleitung 20 auch eine Steuerleitung integriert sein, um die Luftkissenplattform 10, den Manipulatorarm 12, die Kamera 14a und Stellantriebsvorrichtungen 22 mit Strom zu versorgen und zu steuern.

In dem in Figur 1A dargestellten Szenario ist die Kamera 14a auf ein Nachrichtensprecherpult 24 gerichtet, um den Nachrichtensprecher vor einer virtuellen Welt abzubilden. Hierbei ist es gemäß dem erfindungsgemäßen Aufbau möglich, die Kamera 14a kontrolliert sowohl durch den Manipulatorarm 12 als auch über die Stellantriebsvorrichtungen 22 zu bewegen, um jederzeit die Position und Orientierung der Kamera zu ermitteln. Mit diesem Aufbau ist es also auch möglich, die Luftkissenplattform 10 an vorbestimmte Orte zu bewegen, um definierte perspektivische Einstellungen in Bezug auf eine virtuelle Welt zu erlangen.

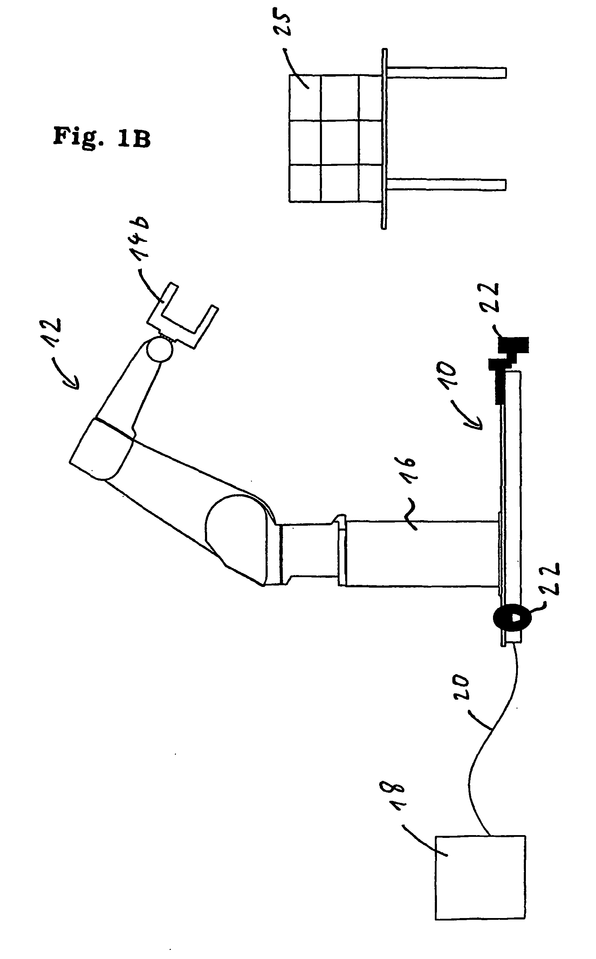

Es ist jedoch auch vorstellbar, dass, wie in Fig. 1B gezeigt, anstatt der Filmkamera 14a eine Greifhand 14b an dem Manipulatorarm 12 montiert ist, um Güter 25 definiert von einem Ort zu einem anderen zu tragen. Im folgenden soll weiter der Aufbau der Luftkissenplattform 10 mit Manipulatorarm 12 mit der Kamera 14a erläutert werden, wobei jedoch die folgenden Ausführungen ebenfalls für eine Luftkissenplattform 10, bei der der Manipulatorarm 12 eine beispielsweise pneumatische Greifhand 14b oder ein Werkzeug wie ein Messinstrument (ein Laserscanner zum Scannen von Konturen), einen Spezialgreifer zum Tragen von zerbrechlichen Gefäßen wie Reagenzgläser im Laborbereich oder einen Schweißarm trägt, gelten sollen.

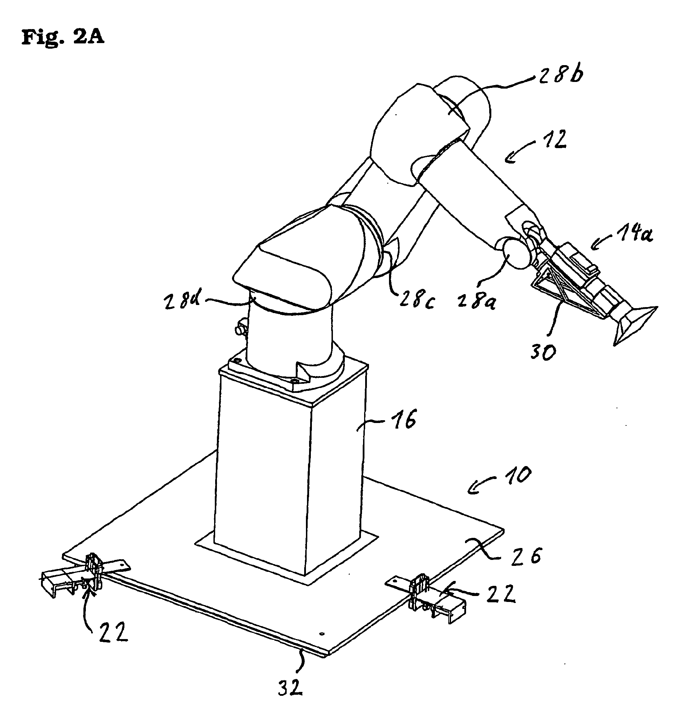

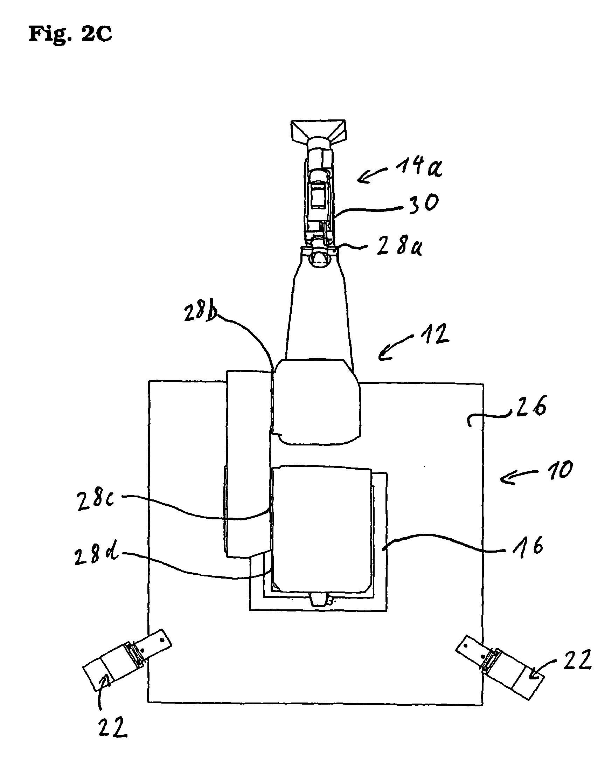

In den Figuren 2A bis 2C sind eine detaillierte perspektivische Ansicht, eine Seitenansicht bzw. eine Draufsicht der Luftkissenplattform 10 mit dem darauf montierten Manipulatorarm 12 und der Kamera 14a gezeigt.

Die Luftkissenplattform 10 weist eine Basis 26 auf, die in dem vorliegenden Ausführungsbeispiel als Sockelplatte ausgebildet ist, welche vorzugsweise aus Stahl hergestellt ist. Auf der Basis 26 ist zentral der Sockel 16 aus Stahl montiert, der im gezeigten Ausführungsbeispiel quaderförmig ist, jedoch auch als Sockelstandrohr ausgebildet sein kann. Auf dem Sockel 16 ist wiederum der Manipulatorarm 12 montiert oder aufgeschraubt, welcher vier Gelenke 28a bis 28d und weitere zwei Gelenke (nicht gezeigt) an seinem Handbereich aufweist, durch welche der an einer Hand oder Halterung 30 angekoppelten Kamera 14a eine Bewegung in sechs räumlichen Freiheitsgraden ermöglicht wird. Weiter ist vorstellbar, dass die Kamera 14a auf einer Schwenk-Neige-Einheit (nicht gezeigt) montiert ist, welche zusätzliche Freiheitsgrade in der Bewegung der Kamera 14a bereitstellt. Die Kamera 14a ist hierbei eine handelsübliche Filmkamera, deren Gewicht bei etwa 2 bis 5 kg liegt. Die Kamera 14a kann entweder über Steuerleitungen in der Versorgungsleitung 20 (Figur 1) oder über Funk gesteuert werden. Die Masse des Manipulatorarms beträgt etwa 250 kg, sie kann jedoch bei einem Manipulatorarm mit höherer Traglast 750 kg betragen. Die Masse des Stahlsockels inklusive der als Basis 26 ausgebildeten Stahlsockelplatte beträgt etwa 360 kg. Die Fläche der Basis 26 beträgt 1.5 x 1,5 m².

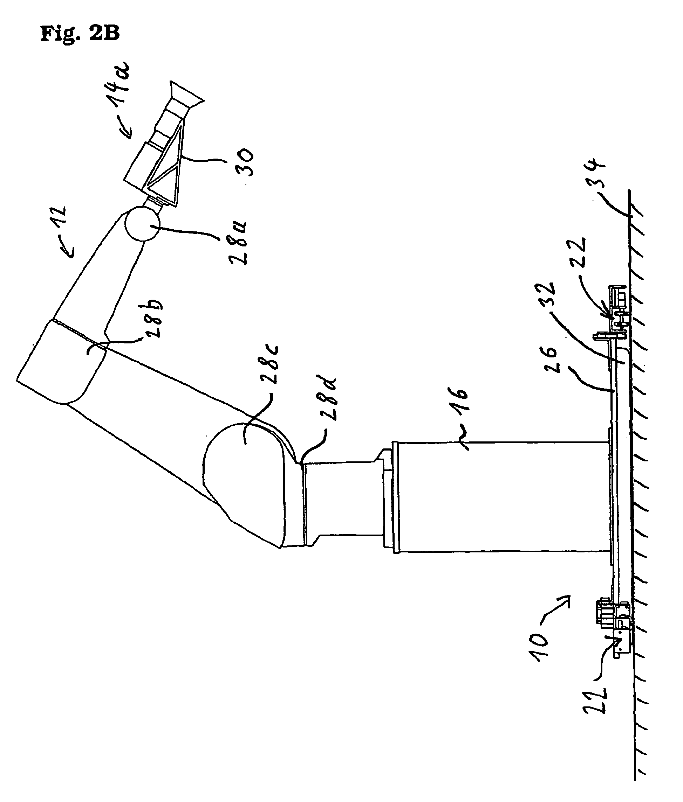

An der Unterseite der Basis 26 ist ein Luftkissensystem 32 (Figur 2B) angebracht, welches die Luftkissenplattform 10 aus einer Standposition in eine Fahrposition mittels eines unter der Basis 26 erzeugten Luftkissens bewegt, wodurch die Luftkissenplattform 10 leichtgängig über einen Boden 34 bewegt werden kann. Der Boden 34, welcher in diesem Fall der Boden eines Fernsehstudios ist, ist vorzugsweise ein glatter und ebener Boden, dessen Oberfläche aus Metall oder einem Kunststoff gefertigt oder mit einem Lack bestrichen ist.

In dem gezeigten Ausführungsbeispiel in Figur 2B ist das Luftkissensystem 32 als eine einzige Palette ausgebildet, an der eine Vielzahl von kleinen Luftkissen angebracht sind, welche untereinander verschlaucht und jeweils mit einem Durchflussventil versehen sind. Somit erfolgt bei einer ungleichmäßigen Gewichtsverteilung automatisch eine passende Druckeinstellung an den verschiedenen Stellen der Basis 26, wodurch der verfahrbare Roboter aus Luftkissenplattform 10 und dem Aufbau aus Manipulatorarm 12 und Sockel 16 stabil in der Handhabung ist. Es ist jedoch auch vorstellbar, ein Luftkissensystem an der Unterseite der Basis 26 zu montieren, welches aus vier einzeinen kleinen Lufthebekissen besteht, die an den Ecken der Basis 26 montiert sind, wodurch die Kosten des Aufbaus verringert werden. Bei einer ungleichmäßigen Gewichtsverteilung kann jedoch eine Überlastung eines Lufthebekissens oder ein Abheben eines unterbelasteten Lufthebekissens mit einer damit verbundenen Schwingung auftreten, weshalb eine Luftkissenpalette bevorzugt ist.

Wie in den Figuren 2A bis 2C gezeigt, sind an einem Randbereich der Basis 26 Stellantriebsvorrichtungen 22 montiert, welche sowohl bei einer Standposition als auch bei einer Fahrposition der Luftkissenplattform 10 in ständigem Kontakt mit dem Boden 34 (Figur 2B) stehen.

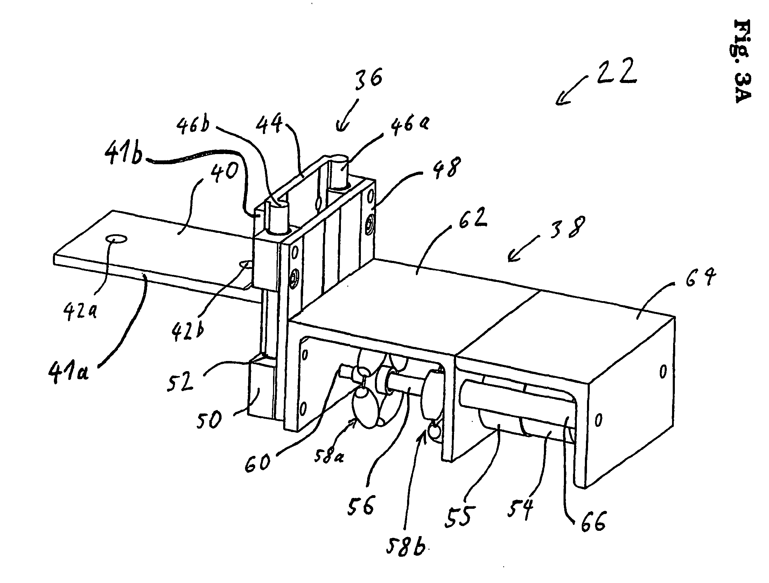

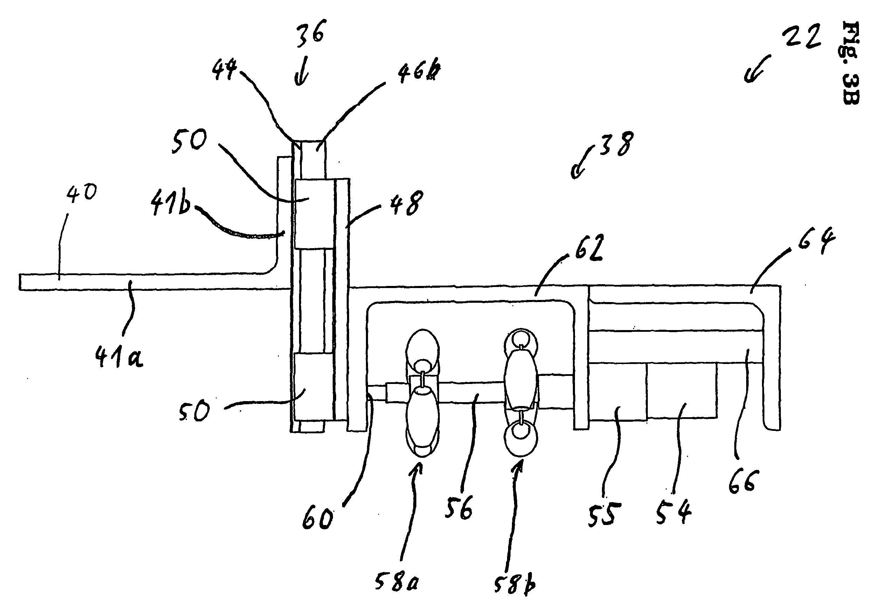

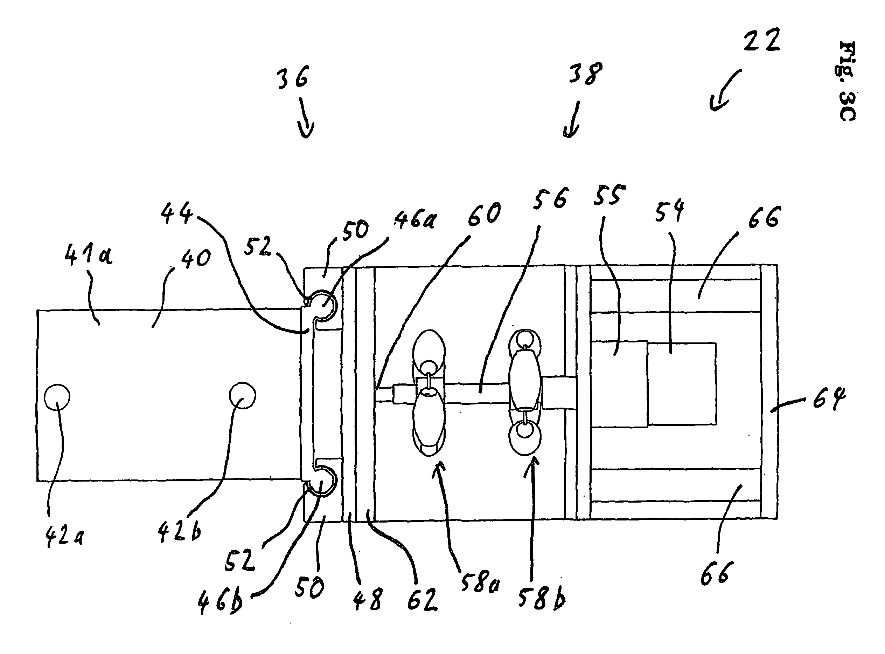

Eine detaillierte Darstellung einer Stellantriebsvorrichtung 22 ist in den Figuren 3A bis 3C in einer perspektivischen Ansicht, einer Seitenansicht und einer Unteransicht gezeigt.

Die Stellantriebsvorrichtung 22 weist eine Gleitführung 36 sowie eine Motorvorrichtung 38 auf. Die Gleitführung 36 umfasst hierbei einen Befestigungsbügel 40 mit einem ersten Schenkel 41a und einem senkrecht darauf stehenden zweiten Schenkel 41b, wobei der erste Schenkel 41a mit Bohrungen 42a, 42b versehen ist, durch welche der Befestigungsbügel 40 an einem Randbereich der Basis 26, vorzugsweise an deren Oberseite, angeschraubt werden kann. Der Befestigungsbügel 40 ist hierbei als Winkel ausgebildet, wobei der zweite Schenkel 41b mit einem Schienenelement 44 verbunden ist, welches zwei zylinderförmige Schienen 46a und 46b aufweist, die im montierten Zustand der Gleitführung 36 an der Basis 26 in einer vertikalen Richtung verlaufen. An dem Schienenelement 44 ist ein Verfahrschlitten 48 gleitend gelagert, wobei dieser Schlittenelemente 50 aufweist, welche die zylinderförmig ausgebildeten Schienen 46a und 46b umfassen und an diesen gleiten. Als Gleitelemente können zwischen den Schlittenelementen 50 und den Schienen 46a, 46b Kunststoffelemente 52 vorgesehen sein, die den Reibungswiderstand zusätzlich verringern. Somit ist bei der Gleitführung 36 der Verfahrschlitten 48 in montiertem Zustand an der Basis 26 in Vertikalrichtung frei beweglich, und in einer Horizontalrichtung aufgrund des Formschlusses zwischen den Schlittenelementen 50 und den Schienen 46a, 46b fest mit der Basis 26 verankert.

Als Material für die Gleitführung, welche eine "trockene" Gleitführung ist, ist beispielsweise hart anodisiertes Aluminium als Schienenmaterial geeignet, welches für beste Reib- und Verschleißergebnisse sorgt. Hierbei macht der Verzicht auf Schmierung das System extrem schmutzunempfindlich und ist somit wartungsfrei. Als Gleitkunststoffelement 52 ist beispielsweise der Werkstoff Iglidur J/J200 geeignet, welcher eine maximale Gleitgeschwindigkeit von 15 m/s und eine Anwendungstemperatur von -40°C bis +90°C ermöglicht. Obwohl in dem vorliegenden Ausführungsbeispiel die Gleitschienen 46a und 46b zylinderförmig ausgebildet sind, sind diese nicht auf diese Form beschränkt, sondern können jegliche Art von Querschnittsformen aufweisen, welche entsprechend von den Schlittenelementen 50 umfasst werden.

An dem Verfahrschlitten 48 ist die Motorvorrichtung 38 befestigt. Die Motorvorrichtung 38 weist einen Motor 54 mit einem Getriebe 55 auf, der als Gleichstromgetriebemotor ausgestaltet ist. Hierbei arbeitet der Motor 54 als Servomotor, um über eine vorbestimmte Anzahl von Umdrehungen eine vorbestimmte Position anfahren zu können. Der Motor 54 ist über das Getriebe 55 mit einer Motorwelle 56 verbunden, auf welcher ein Paar von Antriebsrädern 58a und 58b drehfest montiert ist. Hierbei ist die Motorwelle 56 auf ihrer der Gleitführung 36 zugewandten Seite in einem Aufnahmeloch 60 in einer im Querschnitt U-förmigen Radeinhausung 62 aufgenommen, wobei der Motor 54 an einer der Gleitführung 36 abgewandten Seite der Radeinhausung 62 montiert ist. Hierbei ist der Motor 54 durch einen winkelförmigen Motorschutzbügel 64, welcher durch stiftförmige Befestigungselemente 66 an der Radeinhausung 62 befestigt ist, vor einer Stoßeinwirkung von oben oder von der Seite bei einem Verfahren der Luftkissenplattform 10 geschützt. Die Anordnung des Motors 54 an einer Außenseite und die damit verbundene Anordnung der Antriebsräder 58a und 58b nahe der Gleitführung 36 hat den Vorteil, dass die auf die Gleitführung 36 ausgeübten Kräfte bei einem Verfahren der Basis 26 aufgrund des geringen Hebels zwischen Antriebsrädern und Gleitlager klein gehalten werden.

Der eingesetzte Motor 54 weist vorzugsweise eine Getriebeuntersetzung des Getriebes 55 von 1/100 auf, wobei er eine Abtriebsdrehzahl von etwa 60 Umdrehungen pro Minute, eine Leistungsaufnahme von 1 bis 100 W, bevorzugterweise 1 bis 10 W, und ein maximales Drehmoment von 150 bis 500 Ncm aufweist. Die Antriebsräder 58a und 58b sind als Allseitenräder ausgestaltet, welche auch unter dem Namen "Omniwheel", "schwedische Räder" oder "Mecanum-Räder" im Stand der Technik bekannt sind. Diese Allseitenräder sind speziell ausgebildete Räder, die an der Umlauffläche eines Hauptrades weitere, meist tonnenförmige Hilfsräder aufweisen, deren Drehachsen beispielsweise im rechtem Winkel zur Drehachse des Hauptrades liegen. Dies erlaubt in der Anwendung, dass diese Räder auch, ohne sich gegenseitig zu behindern, nichtparallel benutzt werden können, wodurch ein Differential nicht benötigt wird. Bei den hier gezeigten paarweise angeordneten Allseitenrädern 58a und 58b sind diese so zueinander an der Motorwelle 56 angeordnet, dass die Räder 58a, 58b gegeneinander um einen Winkel von 45° versetzt sind, um einen ruhigen gleichmäßigen Lauf sicherzustellen. Hierbei ist der Durchmesser der Räder 58a und 58b etwa 60 mm und der Wellendurchmesser etwa 8 mm, wobei diese eine maximale Traglast von 20 kg aufweisen. Obwohl die paarweise Anordnung der Räder 58a, 58b aufgrund des ruhigen Laufs bevorzugt ist, ist es jedoch auch vorstellbar, jeweils nur ein Allseitenrad vom Mecanum-Typ an einer Motorwelle 56 vorzusehen.

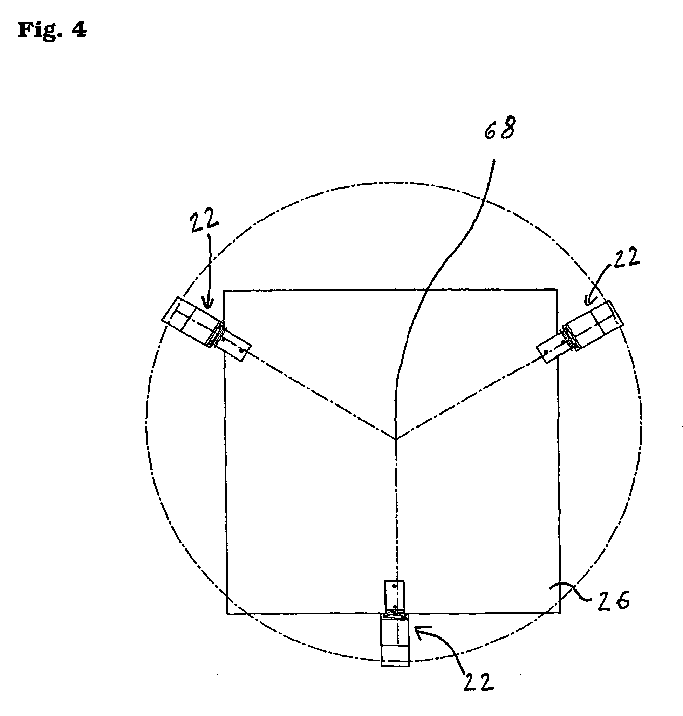

Bei dem Einsatz von Allseitenräder als Antriebsräder 58a, 58b sind die Stellantriebsvorrichtungen 22, wie in Figur 4 gezeigt, vorzugsweise an drei Seiten der Basis 26 im Kreis und zueinander im 120°-Winkel angeordnet, wobei ein gemeinsamer Schnittpunkt 68 einer gedachten Verlängerung der drei Motorwellen 56 gleichzeitig der ungefähre Schwerpunkt des Gesamtsystems ist. Somit kann die Basis 26 jederzeit in jede Richtung verfahren und darüber hinaus um den gemeinsamen Schnittpunkt 68 gedreht werden.

Obwohl das in den Figuren gezeigte Ausführungsbeispiel mit Stellantriebsvorrichtungen, welche fest mit der Basis 26 verbunden sind und welche Allseitenräder 58a und 58b einsetzen, besonders vorteilhaft ist, ist es jedoch auch vorstellbar, normale Antriebsräder zu verwenden, wobei entweder die Antriebsräder über eine schwenkbare Gelenkwelle mit dem Motor 54 verbunden sind, oder wobei die gesamte Stellantriebsvorrichtung 22 oder die Motorvorrichtung 38 in Bezug auf die Basis 26 in Horizontalrichtung dreh- oder schwenkbar gelagert ist. In beiden Fällen ist dann ein weiterer Stellantrieb vorzusehen, welcher die Auslenkung der Gelenkwelle oder der Motorvorrichtung einstellt.

Da die verwendeten Motoren 54 klein und dementsprechend leicht sind, ebenso wie die Motorvorrichtung 38 nicht sehr schwer ist, muss zusätzlich noch ein Gewicht (nicht gezeigt) angebracht werden, um die Motorvorrichtung 38 entsprechend stark auf den Boden zu drücken. Hierbei ist es von Vorteil, dieses Gewicht möglichst nah an der Gleitführung 36 auf der Motorvorrichtung 38, also oberhalb der Antriebsräder 58a, 58b anzubringen, damit beim Absenken oder Heben der Motorvorrichtung 38 keine Verklemmung der Gleitführung 36 auftreten kann. Ferner ist es möglich, statt dem Anbringen einer einfachen Gewichtsmasse auch Gewichte zu verwenden, welche eine Funktion ausführen können, also intelligent sind. Hierfür kommt beispielsweise ein Laserscanner oder ein industrielles Sicherheitssystem beziehungsweise Überwachungssystem in Frage. Dieses System könnte erkennen, sobald sich Personen der Luftkissenplattform 10 nähern und den Antrieb abschalten, um eine Kollision zu vermeiden. Andererseits könnten weiter Sensoren verwendet werden, die eine Positionserkennung ermöglichen, um die Position und Orientierung der Luftkissenplattform 10 in Bezug auf ein am Boden 34 vorgegebenes Referenzsystem zu bestimmen. Es ist jedoch auch vorstellbar, die Motorvorrichtung 38 mittels einer Feder, welche wirkungsmäßig zwischen Basis 26 und Motorvorrichtung 38 angeordnet ist, auf den Boden zu drücken.

Die Luftkissenplattform 10 gemäß der vorliegenden Erfindung weist zudem eine Steuerungsvorrichtung auf (nicht gezeigt), welche das Zusammenspiel der drei Stellantriebsvorrichtungen 22, wie in Figur 4 gezeigt, steuert und welche darüber hinaus dafür Sorge trägt, dass die Stellantriebsvorrichtungen 22 nicht betrieben werden, wenn die Luftkissenplattform 10 sich nicht in einer Fahrposition (bei einem Nichtbetrieb des Luftkissensystem) befindet. In dem vorliegenden Ausführungsbeispiel werden drei Stellantriebsvorrichtungen 22 verwendet, es ist jedoch auch möglich mehr als drei Stellantriebsvorrichtungen 22 zu benutzen, wobei beispielsweise bei vier Stellantriebsvorrichtungen 22 diese jeweils paarweise auf gegenüberliegenden Seiten der Basis 26 angeordnet sein können. Es ist jedoch auch vorstellbar, nur zwei Stellantriebsvorrichtungen 22, deren Verbindungslinie durch den ungefähren Schwerpunkt des Gesamtsystems läuft, vorzusehen.

Bei dem beschriebenen Ausführungsbeispiel dient der Motor 54 nur noch zur Beschleunigung der Luftkissenplattform 10, da aufgrund des Luftkissens im Wesentlichen keine Reibung mehr zwischen Boden 34 und Basis 26 auftritt, welche durch eine Motorkraft 54 überwunden werden müsste. Somit ist es möglich, durch die Verwendung einer Luftkissenplattform Stellantriebsvorrichtungen zu verwenden, welche in der Regel von ihrer Bauart her filigran sind, um somit eine Kameraplattform, welche über 500 kg wiegt, positionsgenau zu verfahren. Hierbei ist es jedoch erforderlich, dass die oben erwähnte Steuerung weiter dafür Sorge trägt, dass sich der Manipulatorarm während der Fahrt nicht bewegt, da aufgrund der hohen Trägheitskräfte ein Verfahren des Manipulatorarms zu hohe Kräfte auf die Antriebsräder 58a, 58b ausüben würde, wodurch entweder ein Verrutschen oder eine Beschädigung der Räder 58a, 58b auftreten könnte. Bei dem Vorsehen von robusten Stellantriebsvorrichtungen ist diese Steuerung jedoch nicht nötig.

## Patentansprüche

1. Luftkissenplattform (10) zum Tragen eines Manipulatorarms (12), mit:
- einer Basis (26), an deren Unterseite ein Luftkissensystem (32) zum Heben der Basis (26) aus einer Standposition in eine Fahrposition über einem Boden (34) angebracht ist,
- zumindest zwei jeweils an der Basis (26) mittels einer Gleitführung (36) vertikal verschiebbar gelagerten Motorvorrichtungen (38) mit einem Servomotor (54) und zumindest einem mit einer Motorwelle (56) des Servomotors (54) verbundenem Antriebsrad (58a, 58b), das in ständigem Kontakt mit dem Boden (34) steht, um die Basis (26) am Boden (34) in der Bodenfläche positionsgenau zu bewegen, und
- einer Steuerung, die mit dem Luftkissensystem (32) und den zumindest zwei Motorvorrichtungen (38) verbunden ist, um die Motorvorrichtungen (38) nur zu betätigen, wenn die Luftkissenplattform (10) sich in einer Fahrposition befindet.

2. Luftkissenplattform (10) nach Anspruch 1, **dadurch gekennzeichnet, dass** das Luftkissensystem (32) zumindest drei Lufthebekissen umfasst, die um den Schwerpunkt der Luftkissenplattform (10) herum angebracht sind.

3. Luftkissenplattform (10) nach Anspruch 1 oder 2, **dadurch gekennzeichnet, dass** das Luftkissensystem (32) eine Palette mit einem einzelnen Luftkissen oder einem Luftkissensystem mit einer Vielzahl von miteinander verbundenen Luftkissen umfasst.

4. Luftkissenplattform (10) nach einem der vorstehenden Ansprüche, **dadurch gekennzeichnet, dass** die Gleitführung (36) folgendes umfasst:
- einen Befestigungsbügel (40) mit einem ersten Schenkel (41a) und einem senkrecht auf dem ersten Schenkel (41a) stehenden zweiten Schenkel (41b), wobei der erste Schenkel (41a) zum Befestigen der Gleitführung (36) an der Basis (26) geeignet ist,
- ein Schienenelement (44), das mit dem zweiten Schenkel (41b) des Befestigungsbügels (40) verbunden ist, und
- einen Verfahrschlitten (48), der gleitend an dem Schienenelement (44) gelagert und der mit der Motorvorrichtung (38) verbunden ist.

5. Luftkissenplattform (10) nach einem der vorstehenden Ansprüche, **dadurch gekennzeichnet, dass** die Motorvorrichtung (38) ferner eine Radeinhausung (62) sowie einen Motorschutzbügel (64) zum Schutz des zumindest einen Antriebsrads (58a, 58b) und des Motors (54) aufweist.

6. Luftkissenplattform (10) nach einem der vorstehenden Ansprüche, **dadurch gekennzeichnet, dass** die Motorvorrichtung (38) mittels einer Feder gegen den Boden (34) gedrückt wird, welche wirkungsmäßig zwischen der Motorvorrichtung (38) und der Basis (26) angebracht ist.

7. Luftkissenplattform (10) nach einem der vorstehenden Ansprüche, **dadurch gekennzeichnet, dass** die Motorvorrichtung (38) ein Zusatzgewicht aufweist, welches oberhalb des zumindest einen Antriebsrads (58a, 58b) angeordnet ist, um das zumindest eine Antriebsrad (58a, 58b) infolge der Schwerkraft des Zusatzgewichts in Kontakt mit dem Boden zu halten.

8. Luftkissenplattform (10) nach einem der vorstehenden Ansprüche, ferner mit Sensoren zur Positionserkennung wie einem Laserscanner.

9. Luftkissenplattform (10) nach Anspruch 7 und 8, **dadurch gekennzeichnet, dass** die Sensoren zur Positionserkennung als Zusatzgewicht verwendet werden.

10. Luftkissenplattform (10) nach einem der vorstehenden Ansprüche, **dadurch gekennzeichnet, dass** die Motorvorrichtung (38) dreh- oder schwenkbar an der Gleitführung (36) gelagert ist.

11. Luftkissenplattform (10) nach einem der Ansprüche 1 bis 9, **dadurch gekennzeichnet, dass** das zumindest eine Antriebsrad (58a, 58b) einem Paar von Allseitenrädern entspricht.

12. Luftkissenplattform (10) nach Anspruch 11, **dadurch gekennzeichnet, dass** drei Stellantriebsvorrichtungen (22) an der Basis (26) im Kreis angeordnet und zueinander im 120°-Winkel stehend vorgesehen sind, wobei der gemeinsame Schnittpunkt (68) der drei Motorwellen (56) der Motorvorrichtungen (38) der ungefähre Schwerpunkt des Gesamtsystems ist.

13. Verfahrbarer Roboter, insbesondere zum gesteuerten Führen eines Werkzeugs (14a, 14b) mit:
- einer Luftkissenplattform (10) nach einem der vorstehenden Ansprüche,
- einem Sockel (16), der auf der Luftkissenplattform (10) montiert und von dieser verfahrbar getragen wird, und
- einem Manipulatorarm (12), der mit seinem einen Endabschnitt auf dem Sockel (16) befestigt ist und der mit seinem anderen Ende (30) ein Werkzeug (14a, 14b) trägt.

14. Verfahrbarer Roboter nach Anspruch 13, **dadurch gekennzeichnet, dass** der Manipulatorarm (12) zwischen seinem anderen Ende (30) und dem Werkzeug (14a, 14b) eine Schwenk-Neige-Einheit aufweist, an welche das Werkzeug (14a, 14b) gekoppelt ist.

15. Verfahrbarer Roboter nach Anspruch 13 oder 14, **dadurch gekennzeichnet, dass** das Werkzeug (14a, 14b) eine Filmkamera (14a) oder eine Greifhand (14b) ist.

## Claims

1. An air cushion platform (10) for carrying a manipulator arm (12) having:
- a base (26) on the bottom side of which an air cushion system (32) is attached for lifting the base (26) from a standing position into a moving position above a floor (34),
- at least two motor devices (38) mounted on the base (26) in each case so that it can be displaced vertically by means of a sliding guide (36), with a servo motor (54) and at least one driving wheel (58a, 58b) connected to a motor shaft (56) of the servo motor (54), which is in constant contact with the floor (34), in order to move the base (26) on the floor (34) in the floor area in a positionally accurate manner, and
- a controller which is connected to the air cushion system (32) and the at least two motor devices (38), in order to actuate the motor devices (38) only when the air cushion platform (10) is located in a moving position.

2. The air cushion platform (10) according to Claim 1, **characterized in that** the air cushion system (32) comprises at least three air lifting cushions which are attached around the centre of gravity of the air cushion platform (10).

3. The air cushion platform (10) according to Claim 1 or 2, **characterized in that** the air cushion system (32) comprises a pallet with a single air cushion or an air cushion system with a plurality of air cushions connected to one another.

4. The air cushion platform (10) according to one of the preceding claims, **characterized in that** the sliding guide (36) comprises the following:
- a fastening bracket (40) with a first arm (41a) and a second arm (41b) which is perpendicular to the first arm (41a), wherein and the first arm (41a) is suited for fastening the sliding guide (36) to the base (26),
- a rail element (44) which is connected to the second arm (41b) of the fastening bracket (40), and
- a carriage (48) which is mounted in sliding fashion on the rail element (44) and which is connected to the motor device (38).

5. The air cushion platform (10) according to one of the preceding claims, **characterized in that** the motor device (38) also has a wheel housing (62) and a motor protection bar (64) to protect the at least one driving wheel (58a, 58b) and the motor (54).

6. The air cushion platform (10) according to one of the preceding claims, **characterized in that** the motor device (38) is pressed against the floor (34) by means of a spring which is operatively attached between the motor device (38) and the base (26).

7. The air cushion platform (10) according to one of the preceding claims, **characterized in that** the motor device (38) has an extra weight, which is arranged above the at least one driving wheel (58a, 58b), to keep the at least one driving wheel (58a, 58b) in contact with the floor (34) owing to the gravitational force of the extra weight.

8. The air cushion platform (10) according to one of the preceding claims, which also has sensors for position detection such as a laser scanner.

9. The air cushion platform (10) according to Claim 7 or 8, **characterized in that** the sensors for position detection are used as an extra weight.

10. The air cushion platform (10) according to one of the preceding claims, **characterized in that** the motor device (38) is mounted rotatbly or pivotably on the sliding guide (36).

11. The air cushion platform (10) according to one of Claims 1 to 9, **characterized in that** the at least one driving wheel (58a, 58b) corresponds to a pair of omni wheels.

12. The air cushion platform (10) according to Claim 11, **characterized in that** three actuator devices (22) are arranged on the base (26) in a circle and being provided at an angle of 120° to one another, wherein the common point of intersection (68) of the three motor shafts (56) of the motor devices (38) is the approximate centre of gravity of the entire system.

13. A movable robot, in particular for the controlled guiding of a tool (14a, 14b) having:
- an air cushion platform (10) according to one of the preceding claims,
- a pedestal (16) which is mounted on the air cushion platform (10) and is carried by the latter in such a way that it can move, and
- a manipulator arm (12) which is fastened with one of its end portions to the pedestal (16) and which carries a tool (14a, 14b) with its other end (30).

14. The movable robot according to Claim 13, **characterized in that** the manipulator arm (12) has, between its other end (30) and the tool (14a, 14b), a pan/tilt unit to which the tool (14a, 14b) is coupled.

15. The movable robot according to Claim 13 or 14, **characterized in that** the tool (14a, 14b) is a film camera (14a) or a gripping hand (14b).

## Revendications

1. Plate-forme sur coussin d'air (10) destinée à porter un bras manipulateur (12), comprenant :
- une base (26) à la face intérieure de laquelle est monté un système de coussin d'air (32) destiné à soulever la base (26) depuis une position de repos jusque dans une position de déplacement au-dessus d'un sol (34),
- au moins deux dispositifs à moteur (38) montés respectivement sur la base (26) avec possibilité de déplacement vertical au moyen d'un guidage coulissant (36), comprenant chacun un servomoteur (54) et au moins une roue d'entraînement (58a, 58b), reliée à un arbre moteur (56) du servomoteur (54), qui se trouve en contact permanent avec le sol (34), afin de déplacer la base (26) sur le sol (34) de manière exacte en position à la surface du sol, et
- une commande, qui est reliée au système de coussin d'air (32) et auxdits au moins deux dispositifs à moteur (38), afin d'actionner les dispositifs à moteur (38) uniquement quand la plate-forme sur coussin d'air (10) se trouve dans une position de déplacement.

2. Plate-forme sur coussin d'air (10) selon la revendication 1, **caractérisée en ce que** le système de coussin d'air (32) comprend au moins deux coussins de levage qui sont agencés tout autour du centre de gravité de la plate-forme sur coussin d'air (10).

3. Plate-forme sur coussin d'air (10) selon la revendication 1 ou 2, **caractérisée en ce que** le système de coussin d'air (32) comprend une palette avec un unique de coussin d'air ou un système de coussin d'air avec une pluralité de coussins d'air reliés les uns aux autres.

4. Plate-forme sur coussin d'air (10) selon l'une des revendications précédentes, **caractérisée en ce que** le guidage coulissant (36) comprend les éléments suivants :
- une potence de fixation (40) avec un premier bras (41a) et un second bras (41b) dressé verticalement sur le premier bras (41a), tels que le premier bras (41a) est approprié à la fixation du guidage coulissant (36) sur la base (26),
- un élément en rail (44), qui est relié au second bras (41b) de la potence de fixation (40), et
- un chariot mobile (48), qui est monté en coulissement sur l'élément en rail (44) et qui est relié au dispositif à moteur (38).

5. Plate-forme sur coussin d'air (10) selon l'une des revendications précédentes, **caractérisée en ce que** le dispositif à moteur (38) comprend en outre un boîtier de roue (62) ainsi qu'un arceau de protection de moteur (64) pour la protection de ladite au moins une roue d'entraînement (58a, 58b) et du moteur (54).

6. Plate-forme sur coussin d'air (10) selon l'une des revendications précédentes, **caractérisée en ce que** le dispositif à moteur (38) est pressé contre le sol (34) au moyen d'un ressort qui est monté de manière à agir entre le dispositif à moteur (38) et la base (26).

7. Plate-forme sur coussin d'air (10) selon l'une des revendications précédentes, **caractérisée en ce que** le dispositif à moteur (38) comprend un poids additionnel qui est agencé au-dessus de ladite au moins une roue d'entraînement (58a, 58b), afin de maintenir ladite au moins une roue d'entraînement (58a, 58b) en contact avec le sol suite à la force de gravité du poids additionnel.

8. Plate-forme sur coussin d'air (10) selon l'une des revendications précédentes, comprenant en outre des capteurs pour la reconnaissance de position, comme un scanneur à laser.

9. Plate-forme sur coussin d'air (10) selon la revendication 7 et 8, **caractérisée en ce que** les capteurs destinés à la reconnaissance de position sont utilisés à titre de poids additionnel.

10. Plate-forme sur coussin d'air (10) selon l'une des revendications précédentes, **caractérisée en ce que** le dispositif à moteur (38) est monté avec possibilité de rotation ou de basculement sur le guidage coulissant (36).

11. Plate-forme sur coussin d'air (10) selon l'une des revendications 1 à 9, **caractérisée en ce que** ladite au moins une roue d'entraînement (58a, 58b) correspond à une paire de roues multidirectionnelles.

12. Plate-forme sur coussin d'air (10) selon la revendication 11, **caractérisée en ce que** trois dispositifs de positionnement (22) sont agencés en cercle sur la base (26) et sont prévus sous un angle de 120° les uns par rapport aux autres, et le point d'intersection commun (68) des trois arbres (56) des dispositifs à moteur (38) est approximativement le centre de gravité du système complet.

13. Robot mobile, en particulier pour le guidage commandé d'un outil (14a, 14b) comprenant :
- une plate-forme sur coussin d'air (10) selon l'une des revendications précédentes,
- un socle (16), qui est monté sur la plate-forme sur coussin d'air (10) et qui est porté par celle-ci de façon déplaçable, et
- un bras manipulateur (12), qui est fixé par son tronçon terminal sur le socle (16) et qui porte un outil (14a, 14b) avec son autre extrémité (30).

14. Robot mobile selon la revendication 13, **caractérisé en ce que** le bras manipulateur (12) comprend, entre son autre extrémité (30) et l'outil (14a, 14b), une unité pivotante/inclinable à laquelle est couplé l'outil (14a, 14b).

15. Robot mobile selon la revendication 13 ou 14, **caractérisé en ce que** l'outil (14a, 14b) est une caméra cinématographique (14a) ou une main de préhension (14b).
